# EUROPEAN PATENT SPECIFICATION

(11) **EP 0 372 909 B1**
(45) Date of publication and mention of the grant of the patent: **03.08.1994**
(21) Application number: 89312669.8
(22) Date of filing: 05.12.1989
(51) Int. Cl.: B60T 17/22, G01F 23/74, H01H 36/00

(54) **Master cylinder hydraulic reservoirs**
Hydraulische Hauptzylinderbehälter
Réservoirs hydrauliques de maître-cylindre

(30) Priority: 06.12.1988 JP 158847/88 U
(43) Date of publication of application: 13.06.1990
(73) Proprietor: NIPPON AIR BRAKE CO., LTD., Kobe-shi Hyogo-ken (JP)
(72) Inventor: Takahashi, Toshiyuki, Miura-gun Kanagawa-ken (JP); Ishiwata, Ichiro, Yokosuka-shi Kanagawa-ken (JP)
(74) Representative: Pilch, Adam John Michael

(56) References cited:
- FR-A- 2 466 002
- GB-A- 1 488 781
- US-A- 3 849 770
- US-A- 3 922 657

## Description

This invention relates to hydraulic reservoirs for master cylinders, such as those suitable for use in vehicles.

Japanese Utility Model Application Publication No. 58-42624 discloses a hydraulic reservoir for a master cylinder in which a reed switch contained in a casing is inserted into a hollow portion formed in the outside wall of the main body of the cylinder for storing brake fluid. During movement of the vehicle, the casing or reed switch can shake in the hollow portion of the main body due to vibration or shock of the vehicle body, and so the reed switch may be damaged.

Also, Patent Specification US-A-3,849,770 discloses a hydraulic reservoir of the type comprising a main body having an internal space for storing brake fluid; a float provided with a permanent magnet and arranged so as to be vertically movable in said internal space of the main body; a reed switch attached to the outside surface of said main body, said reed switch being actuatable by the magnetic force of said permanent magnet when said float with the permanent magnet is positioned below a predetermined level; means forming a hollow for attaching and retaining said switch to the outside surface of said main body; a support in said hollow for supporting the reed switch; and a closure fitted to the inside wall of the hollow-forming means, a first terminal for the reed switch extending through a first hole in the closure.

The present invention provides a reservoir of this type which is characterised in that the closure is tightly and elastically fitted to the inside wall of the hollow-forming means to seal the reed switch in the hollow; a second terminal extends through a second hole in the closure, and the first and second terminals are tightly held by the closure; and a fixing device is fitted to the hollow-forming means so as to urge the closure towards the support whereby the reed switch is held in the hollow. Thus, through its tight and elastic fitting with the hollow-forming means, the closure serves to seal the reed switch. Furthermore, the fixing device is additionally provided to position more securely the support and protect the reed switch more effectively from damage due to vibration or shock resulting from running of the vehicle.

The invention will now be described by way of example with reference to the accompanying drawings, throughout which like parts are referred to by like references, and in which:
Figure 1 is a partly broken away plan view of a protecting structure for a reed switch according to a first embodiment of this invention;
Figure 2 is a cross-sectional view taken along a line II - II in Figure 1;
Figure 3 is a partly broken away bottom view of the protecting structure shown in Figure 1;
Figure 4 is a front view of the protecting structure of Figure 1 taken along a line IV - IV in Figure 2;
Figure 5 is a cross-sectional view taken along a line V - V in Figure 2; and
Figure 6 is a cross-sectional view of a major part of a hydraulic reservoir with a protecting structure for a reed switch according to a second embodiment of this invention.

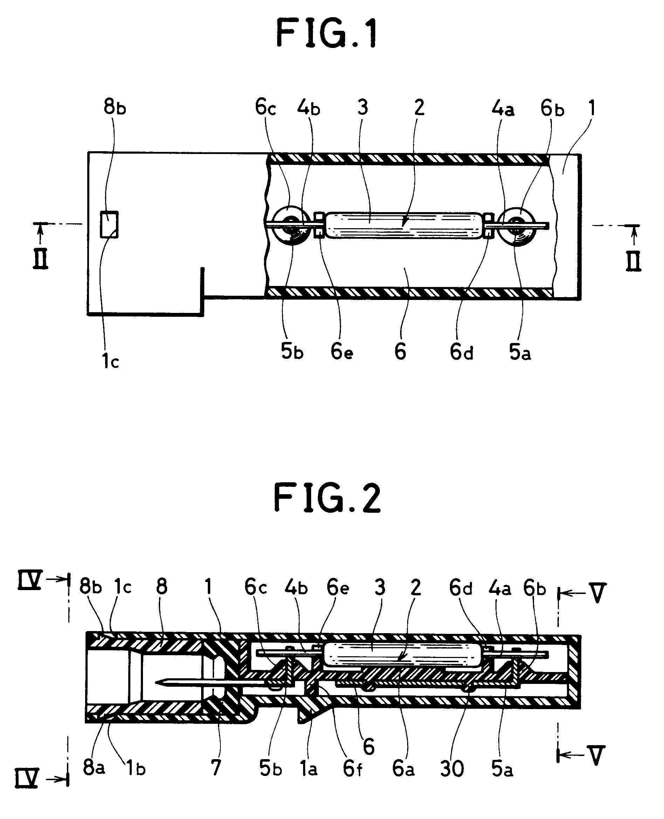

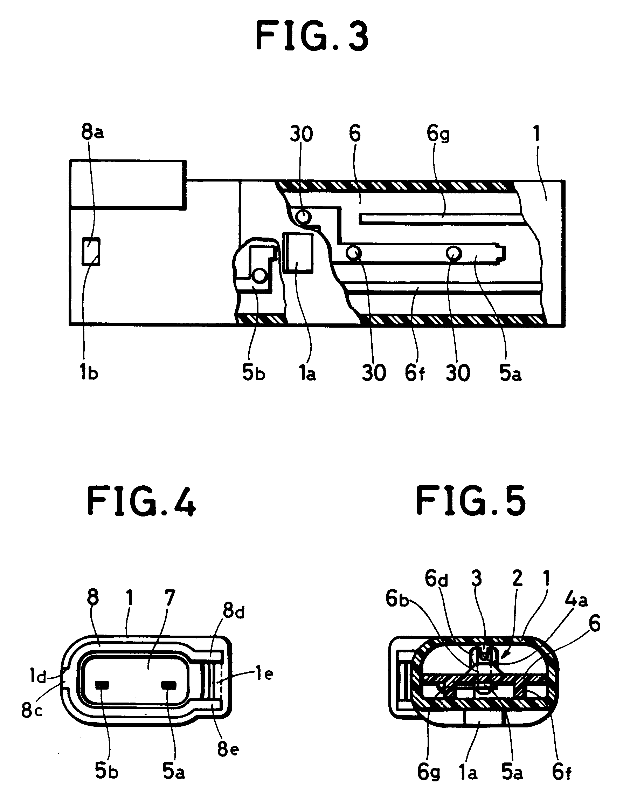

Figures 1 to 5 show a protecting structure for a reed switch in a hydraulic reservoir according to a first embodiment of this invention. In Figures 1 to 5, a reed switch 2 (which has a known construction) is arranged in a casing 1 typically made of synthetic resin. In the reed switch 2, two contacts (not shown) are contained in a sealed glass tube 3. A pair of electrodes 4a and 4b project outwards in opposite directions from the glass tube 3, as shown in Figures 1 and 2, which electrodes are electrically connected to the contacts in the glass tube 3. As shown in Figure 2, the glass tube 3 is supported on a flat projecting portion 6a of a support member 6 typically made of synthetic resin. The end surfaces of the glass tube 3 are pinched by upwardly-projecting portions 6d and 6e of the support member 6, and the electrodes 4a and 4b are supported by cutouts of the upwardly-projecting portions 6d and 6e. Further, conical projections 6b and 6c are formed integrally with the support member 6. Lead wires 5a and 5b in strip form, as shown in Figure 3, are attached to the lower surface of the support member 6. In the assembling operation of the lead wires 5a and 5b and the support member 6, projections from the support member 6 are fitted to holes in the lead wires 5a and 5b, and then these parts are fixed together by a heat-welding method to form heat welded portions 30. End portions of the lead wires 5a and 5b are bent, inserted through slits made in the conical projections 6b and 6c, and electrically connected to the electrodes 4a and 4b. U-shaped cutouts are made in the top ends of the lead wires 5a and 5b, and the electrodes 4a and 4b are supported on the cutouts. The top ends of the lead wires 5a and 5b are connected to the electrodes 4a and 4b, for example by soldering.

The lead wires 5a and 5b extend as shown in Figure 3, along the lower surface of the support member 6, so that the outer ends of the lead wires 5a and 5b are laterally spaced apart by a predetermined distance, as shown in Figure 4. An electrical socket (not shown) is connectable to the outer ends of the lead wires 5a and 5b

A rubber bush 7 is tightly and elastically fitted into the casing 1. The outer ends of the lead wires 5a and 5b are tightly inserted through holes in the rubber bush 7, and so the lead wires 5a and 5b are securely supported by the rubber bush 7. A holding member 8 typically made of synthetic resin and having a U-shaped cross-section as shown in Figure 4 is inserted into the casing 1. A lateral projection 8c of the holding member 8 is guided by a lateral cutout 1d of the casing 1. End portions 8d and 8e of the holding member 8 are guided by grooves formed by a flat projection 1e of the one inside wall of the casing 1. The holding member 8 is engaged with the casing 1. Hook portions 8a and 8b are formed in the peripheral wall of the holding member 8, as shown in Figure 2, and are engaged with cutouts 1b and 1c made in the casing 1. Thus, the holding member 8 is prevented from being detached from the casing 1. The rubber bush 7 is urged towards the support member 6 by the holding member 8. Accordingly, the rubber bush 7 is held stably by the holding member 8 and the inside surface of the casing 1.

The protecting structure shown in Figures 1 to 5 is inserted into a hollow portion formed in a hydraulic reservoir (not shown). A recess is formed in the inside wall of the hollow portion. A hook portion 1a of the casing 1 of the protecting structure is engaged with the recess of the inside wall of the hollow portion. Thus, the protecting structure for the reed switch is prevented from being detached from the hydraulic reservoir.

When vibration or shock is transmitted to the protecting structure through the hydraulic reservoir from the chassis of the vehicle, the vibration or shock is absorbed by the rubber bush 7, and so is not applied to the lead wires 5a and 5b, and therefore to the electrodes 4a and 4b of the reed switch 2. Thus, the reed switch 2 can be protected from damage.

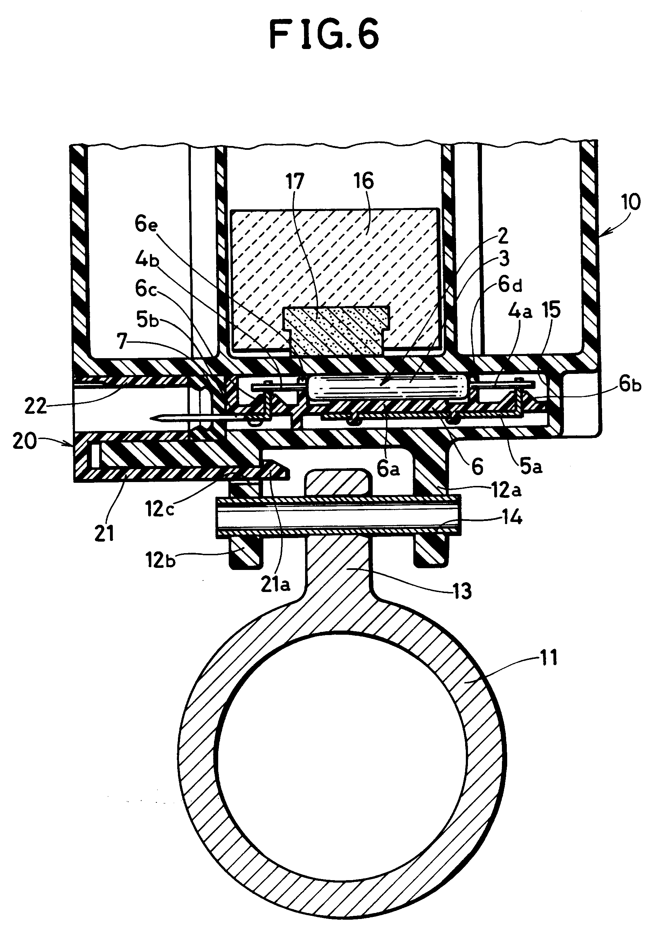

Figure 6 shows a hydraulic reservoir according to a second embodiment of this invention. Parts in Figure 6 which correspond to those in Figures 1 to 5 are denoted by the same reference numerals and will not be described further. In this embodiment, the combination of the reed switch 2 and the support member 6 is not inserted into a casing. It is instead inserted into a hollow portion 15 formed in the bottom portion of a main body 10 of the hydraulic reservoir. The rubber bush 7 is also inserted tightly and elastically fitted into the hollow portion 15. The protecting structure for the reed switch is held in the main body 10 of the hydraulic reservoir by a holder 20.

A level sensor, which consists of a permanent magnet 17 and a float 16, is arranged in the internal space of the main body 10 so as to be movable in the vertical direction. When brake fluid is introduced into the internal space of the main body 10, the float 16 with the permanent magnet 17 floats on the surface of the brake fluid. When the level of the brake fluid has decreased below a predetermined value, magnetic flux from the permanent magnet 17 actuates the reed switch 2.

Downward projections 12a and 12b are formed in the bottom of the hydraulic reservoir, and are fixed to an upward projection 13 of a cylindrical body 11 of a master cylinder by means of a spring pin 14.

The holder 20 consists of an engaging portion 21 and a holding portion 22 for holding the rubber bush 7. The holding portion 22 functions in a similar manner to the holding member 8 in the first embodiment of Figures 1 to 5. The engaging portion 21 is preferably integrally formed with the holding portion 22. The holder 20 is typically made of synthetic resin. A hook 21a is formed in a top end of the engaging portion 21. The engaging portion 21 is inserted through an opening 12c formed in one downward projection 12b of the main body 10. The hook 21a is engaged with the inside wall of the one downward projection 12b. Thus, the protecting structure for the reed switch 2 is attached to the main body 10 of the hydraulic reservoir.

When vibration or shock is transmitted to the protecting structure through the main body 10 of the hydraulic reservoir from the chassis of the vehicle, the vibration or shock is absorbed by the rubber bush 7, and so is not applied to the lead wires 5a and 5b, and therefore to the electrodes 4a and 4b of the reed switch 2. Thus, the reed switch 2 can be protected from damage.

While the preferred embodiments have been described, various modifications are possible.

For example, in the above embodiments, the electrodes 4a and 4b project outwards in opposite directions from the glass tube 3 of the reed switch 2. This invention may however also be applied to a reed switch having electrodes projecting outwards from a glass tube in the same direction.

Further, in the second embodiment of Figure 6, the hollow portion 15 is formed under the bottom wall of the main body 10. Instead, a hollow portion may be formed over the bottom wall of the main body 10. In that case, a lengthwise projection is formed in the inside bottom wall of the main body 10. The combination of the reed switch 2 and the support member 6 shown in Figure 6 or the protecting structure shown in Figures 1 to 5 is then inserted into the hollow portion.

## Claims

1. A hydraulic reservoir for a master cylinder, the hydraulic reservoir comprising:
a main body (10) having an internal space for storing brake fluid;
a float (16) provided with a permanent magnet (17) and arranged so as to be vertically movable in said internal space of the main body (10);
a reed switch (2) attached to the outside surface of said main body (10), said reed switch (2) being actuatable by the magnetic force of said permanent magnet (17) when said float (16) with the permanent magnet (17) is positioned below a predetermined level;
means (15) forming a hollow for attaching and retaining said switch (2) to the outside surface of said main body (10);
a support (6) in said hollow for supporting the reed switch (2); and
a closure (7) fitted to the inside wall of the hollow-forming means (15), a first terminal (51) for the reed switch (2) extending through a first hole in the closure;
characterised in that:
the closure (7) is tightly and elastically fitted to the inside wall of the hollow-forming means (15) to seal the reed switch (2) in the hollow;
a second terminal (5b) extends through a second hole in the closure, and the first and second terminals are tightly held by the closure; and
a fixing device (8;20) is fitted to the hollow-forming means (15) so as to urge the closure (7) towards the support (6) whereby the reed switch (2) is held in the hollow.

2. A hydraulic reservoir according to claim 1, wherein said hollow-forming means comprises a cylindrical casing (1) engaged with a hollow portion formed in the outside of said main body.

3. A hydraulic reservoir according to claim 1, wherein said hollow-forming means comprises a hollow portion (15) formed in the outside of said main body (10), and said fixing means (20) is engaged with a part of said main body (10).

4. A hydraulic reservoir according to claim 1, claim 2 or claim 3, wherein said sealing means (7) is made of rubber.

## Patentansprüche

1. Hydraulischer Behälter für einen Hauptzylinder, wobei der hydraulische Behälter aufweist:
einen Hauptkörper (10), der einen Innenraum zum Speichern von Bremsflüssigkeit hat;
einen Schwimmer (16), der mit einem Permanentmagneten (17) ausgestattet ist und so angeordnet ist, daß er senkrecht in dem Innenraum des Hauptkörpers (10) beweglich ist;
ein Reedschalter (2), der an der Außenoberfläche des Hauptkörpers (10) angebracht ist,
wobei der Reedschalter (2) durch die Magnetkraft des Permanentmagneten (17) betätigbar ist, wenn der Schwimmer (16) mit dem Permanentmagneten (17) unter einem vorbestimmten Niveau positioniert ist;
Mittel (15), die einen Hohlraum bilden, um den Schalter (2) an der äußeren Oberfläche des Hauptkörpers (10) zu befestigen und zu halten;
eine Stütze (6) in dem Hohlraum, um den Reedschalter (2) zu stützen;
und
einen Verschluß (7), der in der Innenwand der Hohlraum formenden Mittel (15) eingebaut ist, einen ersten Anschluß (51) für den Reedschalter (2), der sich durch ein erstes Loch in dem Verschluß erstreckt;
**dadurch gekennzeichnet, daß:**
der Verschluß (7) fest und elastisch an der inneren Wand der Hohlraum formenden Mittel (15) angebracht ist, um den Reedschalter (2) in dem Hohlraum abzudichten;
sich ein zweiter Anschluß (5b) durch ein zweites Loch in dem Verschluß erstreckt und die ersten und zweiten Anschlüsse fest durch den Verschluß gehalten werden; und
eine Befestigungsvorrichtung (8; 20) an den Hohtraum formenden Mitteln (15) so angebracht ist, daß der Verschluß (7) gegen die Stütze (6) gezwungen wird, wodurch der Reedschalter (2) in dem Hohlraum gehalten wird.

2. Hydraulischer Behälter nach Anspruch 1, wobei die Hohlraum bildenden Mittel ein zylindrisches Gehäuse (1) aufweisen, welches mit einem hohlen Teil in Eingriff gebracht ist, der in der Außenseite des Hauptkörpers gebildet ist.

3. Hydraulischer Behälter nach Anspruch 1, wobei die Hohlraum bildenden Mittel einen hohlen Teil (15) aufweisen, der in der Außenseite des Hauptkörpers (10) gebildet ist, und wobei die Befestigungsmittel (20) mit einem Teil des Hauptkörpers (10) in Eingriff gebracht sind.

4. Hydraulischer Behälter nach Anspruch 1, Anspruch 2 oder Anspruch 3, wobei die Abdichtungsmittel (7) aus Gummi hergestellt sind.

## Revendications

1. Réservoir hydraulique de maître-cylindre, le réservoir hydraulique comprenant :
un corps principal (10) comportant un espace interne pour stocker le liquide de freinage;
un flotteur (16) doté d'un aimant permanent (17) et agencé pour être mobile verticalement dans ledit espace interne du corps principal (10);
un interrupteur à lames souples (2) fixé à la surface externe dudit corps principal (10), ledit interrupteur à lames souples (2) pouvant être actionné par la force magnétique dudit amant permanent (17) lorsque ledit flotteur (16) avec l'aimant permanent (17) est positionné en dessous d'un niveau prédéterminé;
un moyen (15) formant une cavité pour fixer et retenir ledit interrupteur (2) à la surface externe dudit corps principal (10);
un support (6) dans ladite cavité pour supporter l'interrupteur à lames souples (2); et
une fermeture (7) fixée à la paroi interne du moyen (15) formant une cavité, une première borne (5a) pour l'interrupteur à lames souples (2) s'étendant à travers un premier trou dans la fermeture;
caractérisé en ce que :
la fermeture (7) est fixée hermétiquement et élastiquement à la paroi interne du moyen (15) formant une cavité pour rendre étanche l'interrupteur à lames souples (2) dans la cavité;
une seconde borne (5b) s'étend à travers un second trou dans la fermeture, et la première et la seconde bornes sont maintenues en toute étanchéité par la fermeture; et
un dispositif de retenue (8; 20) est monté sur le moyen (15) formant une cavité afin de solliciter la fermeture (7) vers le support (6) de sorte que l'interrupteur à lames souples (2) soit maintenu dans la cavité.

2. Réservoir hydraulique selon la revendication 1, dans lequel ledit moyen formant une cavité comprend un boîtier cylindrique (1) engagé avec une cavité formée dans l'extérieur dudit corps principal.

3. Réservoir hydraulique selon la revendication 1, dans lequel ledit moyen formant une cavité comprend une cavité (15) formée dans l'extérieur dudit corps principal (10), et ledit moyen de retenue (20) est engagé avec une partie dudit corps principal (10).

4. Réservoir hydraulique selon la revendication 1, 2 ou 3, dans lequel ledit moyen d'étanchéité (7) est en caoutchouc.
